# EUROPÄISCHE PATENTSCHRIFT

(11) **EP 1 701 233 B1**
(45) Veröffentlichungstag und Bekanntmachung des Hinweises auf die Patenterteilung: **11.01.2012**
(21) Anmeldenummer: 06110580.5
(22) Anmeldetag: 02.03.2006
(51) Int. Cl.: G05B 19/418

(54) **Generierung virtueller Welten auf Basis einer realen Umgebung**
Generation of virtual worlds based on a real environment
Génération de réalités virtuelles sur la base d'un environnement réel

(30) Priorität: 10.03.2005 DE 102005011126
(43) Veröffentlichungstag der Anmeldung: 13.09.2006
(73) Patentinhaber: SIEMENS AKTIENGESELLSCHAFT, 80333 München (DE)
(72) Erfinder: Hoffmann, Werner, 91074 Herzogenaurach (DE)

(56) Entgegenhaltungen:
- EP-A- 1 403 790
- WO-A-03/046672
- WO-A-03/059582
- DE-A1- 10 128 015
- DE-A1- 10 240 392
- US-A1- 2003 030 734
- FISCHER J ET AL: "Detecting dynamic occlusion in front of static background for AR scenes" VIRTUAL ENVIRONMENTS. PROCEEDINGS OF THE EUROGRAPHICS WORKSHOP. EUROGRAPHICS, PROCEEDINGS OF EGVE, 22. Mai 2003 (2003-05-22), Seiten 153-161, XP002268879

## Beschreibung

Die Erfindung betrifft ein System und ein Verfahren zur Modellierung einer realen Umgebung und ein Augmented-Reality System mit einem System zur Modellierung einer realen Umgebung.

Die Erfindung kommt überall dort zum Einsatz, wo ein insbesondere dreidimensionales computerimplementiertes Modell einer realen Umgebung benötigt wird. Als Beispiel für eine derartige Umgebung sei eine Fertigungsumgebung genannt, in der automatisierte Fertigungsprozesse ablaufen. Mit Hilfe des Modells lassen sich Umbaumaßnahmen einer bestehenden Anlage im Vorfeld rechnergestützt planen. Ferner können Prozessabläufe mit Hilfe des Modells nachgebildet und optimiert werden. Darüber hinaus eignet sich ein dreidimensionales Umgebungsmodell zur Unterstützung von Service- und Montagearbeiten, um beispielsweise einem Servicetechniker gestörte Komponenten im Modell anzuzeigen, so dass diese leichter lokalisiert werden können.

Ein weiterer Einsatzbereich der Erfindung ist in Augmented-Reality Anwendungen zu sehen. Augmented-Reality beschreibt eine Technologie, bei der das Blickfeld eines Anwenders, in dem sich reale Objekte befinden, mit zusätzlichen virtuellen Objekten angereichert wird. Zur Erzeugung der gemischt realvirtuellen Darstellung kann die Erfindung insbesondere zur Modellerstellung der realen Umgebung Anwendung finden.

Ein 3-dimensionales Modell einer realen Umgebung entsteht häufig schon in einer Planungsphase, in der die reale Umgebung, z. B. eine Fertigungsanlage, projektiert wird. Beispielsweise ist bekannt, ganze Fabriken zunächst mit einem CAD-Programm rechnergestützt zu entwerfen, bevor diese gebaut werden.

Aus der DE 101 28 015 A1 ist ein Verfahren und ein System bekannt, wobei virtuelle Planungsergebnisse mit Hilfe eines Augmented Reality Systems einer realen Fertigungsumgebung überlagert werden. Die Überlagerung virtueller Planungsobjekte mit der realen Umgebung ermöglicht einem Träger einer Datenbrille eine einfache Möglichkeit für eine Kollisionsanalyse, bei der überprüft wird, ob das Planungsobjekt von seinen Abmessungen oder von seinem Aktionsradius an einer vorgesehenen Stelle in der realen Umgebung positioniert werden kann.

Aus WO 03/059582 A2 ist ein Verfahren zur Programmierung eines Roboters bekannt. Zur Programmierung des Roboters werden Daten aus einer dreidimensionalen Simulationsumgebung importiert, in der eine Fertigungszelle mit dem Roboter modelliert ist. Mithilfe eines laserbasierten Messverfahrens werden geometrische Abweichungen der realen Fertigungszelle von der modellierten virtuellen Fertigungszelle erfasst. Hieraus wird ein Offset berechnet, mit dem die simulierten Werkzeugwege des Roboters korrigiert werden, umso ein zur Steuerung des Roboters geeignetes Steuerungsprogramm zu erstellen. Die erfassten realen Geometriewerte werden in die Simulation zurückgespeist, um das virtuelle Modell der Fertigungszelle zu aktualisieren.

Aus WO 03/046672 A ist ein Verfahren zur computergestützten Überprüfung eines Montagevorgangs beispielsweise eines Kraftfahrzeugs bekannt. Zu jeder Komponente beziehungsweise zu jedem Modul des Kraftfahrzeugs sind numerische Daten auf einem zentralen Server abgelegt, die deren Dimensionen und Positionen in einem dreidimensionalen Bezugssystem beschreiben. Zur Simulation eines Montagevorgangs werden die numerischen Daten der zu montierenden Komponenten in eine dreidimensionalen Simulationsumgebung geladen. Der Montagevorgang wird dadurch nachgebildet, das den den numerischen Daten zugeordneten Objekten jeweils ein Startpunkt, eine Kurve und eine Geschwindigkeit zugeordnet werden. Kollisionen, die beim realen Montagevorgang entstehen würden, können so schon in der virtuellen Welt erkannt werden.

Der Erfindung liegt die Aufgabe zu Grunde, eine einfache Erstellung eines Modells einer realer Umgebungen und eine aufwandsarme Aktualisierung des Modells nach Veränderungen der realen Umgebung zu ermöglichen.

Diese Aufgabe wird durch ein System mit den Merkmalen gemäß Anspruch 1 gelöst.

Schließlich wird die Aufgabe durch ein Verfahren mit den Merkmalen gemäß Anspruch 15 gelöst.

Ein Grundgedanke der Erfindung ist es, in einer realen Umgebung angeordneten Objekten jeweils eigene insbesondere dreidimensionale Objektmodelle zuzuordnen. Weiterhin verfügt das erfindungsgemäße System über Mittel zur Positionserfassung, mit denen die Position jedes Objektes in Bezug auf die reale Umgebung bestimmt werden kann. Auf dem zweiten Speicherbereich, der sich beispielsweise auf einem zentralen Server befinden kann, ist bereits ein insbesondere dreidimensionales Modell der realen Umgebung abgelegt. Innerhalb dieses dreidimensionalen Umgebungsmodells sind die einzelnen Objektmodelle, die den verschiedenen Objekten der realen Umgebung zugeordnet sind, zu einem Gesamtmodell zusammengefügt.

Bei einer Veränderung der realen Umgebung, z.B. durch Verschiebung eines realen Objektes innerhalb der realen Umgebung, kann das Umgebungsmodell nun jederzeit aktualisiert werden. Mit Hilfe der Mittel zur Positionserfassung kann eine neue Position des realen Objektes ermittelt werden, so dass auch die Position des zugehörigen Objektmodells innerhalb des Umgebungsmodells entsprechend aktualisiert werden kann. Diese Aktualisierung des Umgebungsmodells geschieht beispielsweise auf dem zentralen Server.

Die Erfindung bietet darüber hinaus den Vorteil, dass das Umgebungsmodell der realen Umgebung sehr schnell angepasst werden kann, wenn ein neues Objekt in die reale Umgebung integriert wird. Hierzu muss lediglich mit den Mitteln zur Positionserfassung zunächst die Position des neuen realen Objektes bestimmt werden und anschließend das zugehörige Objektmodell positionsgenau in das Umgebungsmodell integriert werden.

Die Mittel zur Positionserfassung können verschiedenartig ausgeführt sein. In einer ersten Ausführung umfassen die Mittel zur Positionserfassung einen zur Anordnung am realen Objekt vorgesehenen Positionssensor, der zur Positionsbestimmung des realen Objektes in Bezug auf die reale Umgebung vorgesehen ist. Ein derartiger Positionssensor ist in der Lage, die Position des realen Objektes in Bezug auf andere reale Objekte in seiner Umgebung zu ermitteln. Beispielsweise wird hierzu eine Signallaufzeitmessung durchgeführt. Der am realen Objekt angebrachte Positionssensor sendet z. B. ein Funksignal an ein weiteres reales Objekt in seiner Umgebung. Aus der Laufzeit des Funksignals kann die Entfernung zwischen den beiden realen Objekten bestimmt werden. Alternativ zur Entfernungsbestimmung mittels eines Funksignals kann der Positionssensor auch zur optischen Positionsbestimmung ausgeführt sein, z. B. mittels Infrarot oder laseroptischer Vermessungsmethoden.

Die vom Positionssensor erfassten Positionsdaten müssen anschließend von dem realen Objekt zu der Verarbeitungseinheit, die insbesondere als zentraler Server ausgeführt sein kann, gesendet werden.

Alternativ weisen die Mittel zur Positionserfassung mindestens einen zur Anordnung am realen Objekt vorgesehenen Positionsmarker und eine Erfassungseinheit zur Erfassung der Position des Positionsmarkers auf. Bei dem Positionsmarker kann es sich beispielsweise um einen RFID Tag handeln. Derartige Marker werden im Augmented Reality Umfeld für ein Tracking verwendet, bei dem z. B. die Position eines Anwenders in Bezug auf die reale Umgebung bestimmt wird. Der Marker wird an dem realen Objekt befestigt und kann mit Hilfe einer Kamera erfasst werden. Durch das Tracking kann so die reale Position des realen Objektes ermittelt werden.

Auch der erste Speicherbereich kann verschiedenartig ausgeführt sein. In einer ersten Ausführungsform ist der erste Speicherbereich in der Verarbeitungseinheit angeordnet. Beispielsweise sind in einem Speicher der Verarbeitungseinheit einzelne Objektmodelle verschiedener in der realen Umgebung positionierter realer Objekte abgelegt. Zur positionsgenauen Integration eines Objektmodells in das Umgebungsmodell wird die Position des zugehörigen realen Objektes zunächst mit Hilfe der Mittel zur Positionserfassung bestimmt. Anschließend verknüpft die Verarbeitungseinheit die entsprechenden Positionsinformationen mit dem zugehörigen im Speicher der Verarbeitungseinheit abgelegten Objektmodell, so dass die Verarbeitungseinheit in der Lage ist, das Objektmodell positionsgenau in das Umgebungsmodell zu integrieren.

Alternativ zu dieser Ausführungsform ist der erste Speicherbereich zur Anordnung am realen Objekt vorgesehen. In diesem Fall ist jedes Objektmodell auch räumlich seiner zugehörigen realen Komponente zugeordnet. Zur Integration eines Objektmodells an das Umgebungsmodell muss die Verarbeitungseinheit daher das zugehörigere Objektmodell direkt von dem realen Objekt abrufen. Hierzu ist es zweckmäßig, dass das System eine zur Anordnung am realen Objekt vorgesehene Sendevorrichtung, die zum Senden von Positionsinformationen über die Position des realen Objektes und/oder zum Senden des Objektmodells vorgesehen ist, aufweist. Insbesondere dann, wenn das reale Objekt einen Positionssensor aufweist, muss die Position des realen Objektes an die Verarbeitungseinheit gesendet werden. Ebenso muss das Objektmodell an die Verarbeitungseinheit gesendet werden, wenn das Objektmodell in einem am realen Objekt angebrachten Speicher abgelegt ist. Eine derartige Ausführungsform hat den Vorteil, dass ein neues reales Objekt, das in die reale Umgebung integriert werden soll, die für die Aktualisierung des Umgebungsmodells notwendigen Informationen selbst trägt. Eine manuelle Aktualisierung eines Speichers der Verarbeitungseinheit ist in einem solchen Fall nicht notwendig. Positionsinformationen und Objektmodell werden einfach z.B. über eine Funkstrecke an die Verarbeitungseinheit übermittelt.

Bei einer typischen Anwendung des Systems ist das System zur Modellierung einer automatisierten Prozessumgebung vorgesehen und das reale Objekt insbesondere als Automatisierungsobjekt oder als Komponente eines Automatisierungsobjektes ausgeführt. Als Automatisierungsobjekt können hierbei sämtliche an einem Automatisierungsprozess, beispielsweise einem Fertigungsprozess, beteiligten Mittel verstanden werden, wie zum Beispiel ein Roboter oder einer seiner Komponenten, ein Förderband oder eine Maschine bzw. Teile davon. Derartige automatisierte Prozessumgebungen unterliegen in der Praxis häufig Veränderungen. Zwar werden zur Planung solcher automatisierter Prozessumgebungen in der Regel CAD-Werkzeuge eingesetzt und somit auch im Vorfeld ein dreidimensionales Modell der automatisierten Prozessumgebung geschaffen; bei einer Veränderung der Prozessumgebung, z.B. durch Hinzufügen eines neuen Fertigungsroboters oder ähnlichem, muss das dreidimensionale Modell der Prozessumgebung jedoch aktualisiert werden. Vorteilhafter Weise liegt hierbei ein Objektmodell des neu zu integrierenden Fertigungsroboters vor. Mit den Mitteln zur Positionserfassung und der Verarbeitungseinheit kann das Objektmodell des Fertigungsroboters dann in das bereits bestehende Umgebungsmodell positionsgenau integriert werden, so dass anschließend wieder ein aktualisiertes dreidimensionales Modell der kompletten Fertigungsumgebung vorliegt.

Da auf diese Art und Weise das Umgebungsmodell der automatisierten Prozessumgebung stets aktuell gehalten werden kann, eignet es sich hervorragend für ein Asset Management der automatisierten Prozessumgebung. Es liegen stets aktuelle Pläne und Inventarlisten der zugehörigen Anlagen vor und Veränderungen können automatisch dokumentiert werden. Auch für Serviceanwendungen kann das Umgebungsmodell der automatisierten Prozessumgebung genutzt werden, um darin gestörte Komponenten anzuzeigen. Somit kann ein Servicetechniker diese Komponente sofort identifizieren und lokalisieren.

Das System ist insbesondere geeignet, um in ein Augmented Reality System integriert zu werden. Augmented Reality, erweiterte Realität, ist eine Form der Mensch-Technikinteraktion, die dem Menschen z.B. über eine Datenbrille Informationen in sein Sichtfeld einblendet und damit die von ihm wahrgenommene aktuelle Realität erweitert. Dieses geschieht im Allgemeinen kontextabhängig, d.h. passend zum und abgeleitet vom betrachteten Objekt.

Bei der Einblendung eines virtuellen Objektes in die reale Umgebung ist es vorteilhaft, wenn die Verarbeitungseinheit zur positionsgenauen Integration eines weiteren Objektmodells, welches ein virtuelles Objekt modelliert, in das Umgebungsmodell vorgesehen ist. Beispielsweise wird hierbei das Augmented Reality System zur Planung einer Umbaumaßnahme benutzt, bei der ein neues Objekt, welches durch das weitere Objektmodell modelliert wird, in die reale Umgebung integriert werden soll. Um bereits im Vorfeld einen Eindruck von der auf diese Weise neu entstehenden Umgebung zu erhalten, wird das weitere Objektmodell in das bereits existierende Umgebungsmodell integriert. Dies sollte positionsgenau geschehen, um einen möglichst realitätsnahen Eindruck von der neuen Umgebung zu bekommen. Mit Hilfe der Verarbeitungseinheit kann das zuvor existierende Modell der dreidimensionalen realen Umgebung mit dem weiteren Objektmodell des virtuellen Objektes derartig verknüpft werden, dass ein neues Umgebungsmodell geschaffen wird, in dem das virtuelle Objekt an seiner geplanten Position integriert ist. Die resultierende gemischt real-virtuelle Welt kann einem Anwender des Systems visualisiert werden, so dass dieser bereits im Vorfeld einen Eindruck von der geplanten Umbaumaßnahme bekommen kann.

Einen besonders realitätsnahen Eindruck von der geplanten Umgebung erhält der Anwender, wenn die Verarbeitungseinheit zur Berechnung wechselseitiger Verdeckungen der realen Umgebung und des virtuellen Objektes in Abhängigkeit einer Position des virtuellen Objektes in Bezug auf die reale Umgebung vorgesehen ist. Wird beispielsweise bei einer Realisierung der geplanten Umgebung ein Teil des virtuellen Objektes von einem bereits existierenden realen Objekt verdeckt, so ist es vorteilhaft, wenn der Anwender des Augmented Reality Systems dies bereits in der Planungsphase erkennen kann. Durch die Berechnung derartiger wechselseitiger Verdeckungen kann dies geleistet werden.

Zweckmäßigerweise weist das Augmented Reality System eine Wiedergabevorrichtung zur Darstellung des weiteren Objektmodells auf, wobei die Flächen des weiteren Objektmodells ausgeblendet sind, die von der realen Umgebung verdeckt werden. Auf diese Art und Weise können die zuvor von der Verarbeitungseinheit berechneten wechselseitigen Verdeckungen mit Hilfe der Wiedergabevorrichtung visualisiert werden.

Bei einer möglichen Methode zur Darstellung der gemischt virtuellen/realen Umgebung mit einem Augmented Reality System wird die Wiedergabevorrichtung zur Darstellung eines Teils des Umgebungsmodells vorgesehen, der ein im Blickfeld des Anwenders befindlichen Bereich der realen Umgebung modelliert. Bei einer derartigen Gestaltung handelt es sich um eine Ausführung des so genannten Video-See-Through Verfahren. Hierbei wird die im Blickfeld des Anwenders befindliche reale Umgebung z.B. mit einer Erfassungseinheit erfasst und detektiert. Die entsprechenden Teile des Umgebungsmodells der realen Umgebung werden anschließend mit Hilfe der Wiedergabevorrichtung dargestellt. Bei der Darstellung werden nur die Teile des weiteren Objektmodells eingeblendet, die von der realen Umgebung nicht verdeckt werden.

Alternativ kann die reale Umgebung auch mit einer Kamera erfasst werden, so dass das aufgenommene Bild direkt mit der Wiedergabevorrichtung eingeblendet wird. Die Teile des weiteren Objektmodells bzw. des virtuellen Objektes, die nicht von der realen Umgebung verdeckt werden, werden einfach über das Abbild der realen Umgebung gelegt.

Eine alternative Ausführungsform hierzu stellt das so genannte Optical-See-Through Verfahren dar. Hierbei wird die Wiedergabevorrichtung als durchsichtige Datenbrille ausgeführt, durch die die reale Umgebung vom Anwender direkt wahrnehmbar ist. In diesem Fall dient das Umgebungsmodell der realen Umgebung nur dazu, Verdeckungen des virtuellen Objektes durch die reale Umgebung und umgekehrt zu berechnen. Eingeblendet wird in die Wiedergabevorrichtung nur der Teil des virtuellen Objektes, bzw. des weiteren Objektmodells, der nicht von einem realen Objekt in der realen Umgebung verdeckt würde. Diese Einblendung befindet sich direkt im Sichtfeld des Anwenders. Die reale Umgebung nimmt der Anwender direkt durch die durchsichtige Datenbrille wahr.

Zur Berechnung der wechselseitigen Verdeckungen von der realen Umgebung und den virtuellen Objekten, ist es zweckmäßig, wenn das Augmented Reality System Mittel zur Erfassung des Blickfeldes und/oder Blickwinkels des Anwenders aufweist. Ein typisches Beispiel für derartige Systeme sind so genannte Eye-Tracking Systeme.

Im Folgenden wird die Erfindung anhand der in den Figuren dargestellten Ausführungsbeispiele näher beschrieben und erläutert. Es zeigen:
- FIG 1: eine schematische Darstellung eines Systems zur Modellierung einer realen Umgebung,
- FIG 2: eine Darstellung eines Umgebungsmodells einer automatisierten Prozessumgebung und
- FIG 3: eine schematische Darstellung eines Augmented Reality Systems mit einem System zur Modellierung einer realen Umgebung.

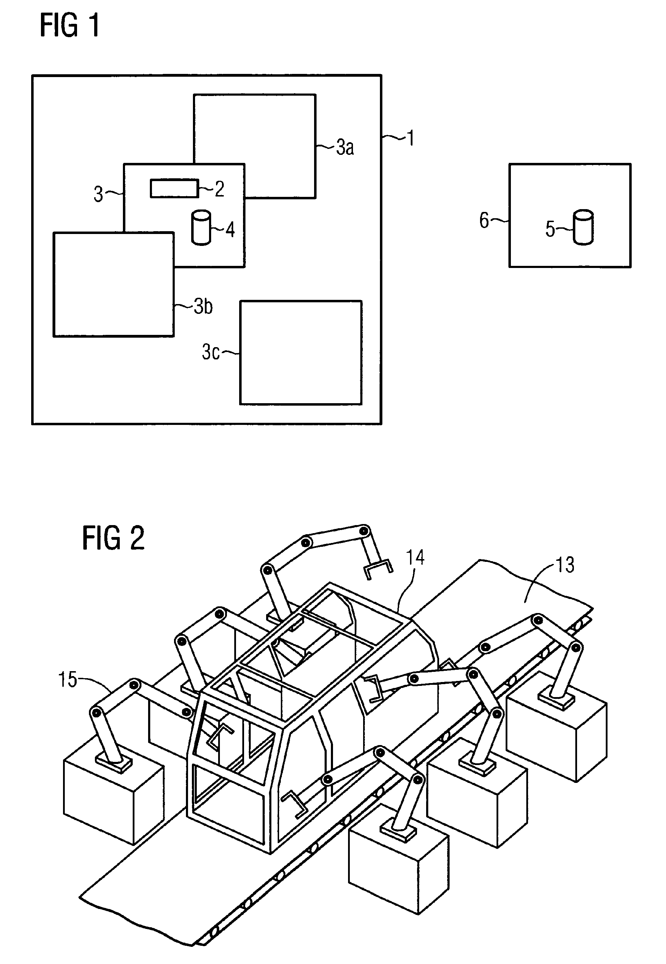

FIG 1 zeigt eine schematische Darstellung eines Systems zur Modellierung einer realen Umgebung 1. Innerhalb der realen Umgebung 1 befinden sich ein reales Objekt 3 sowie weitere reale Objekte 3a,3b,3c. Das System weist eine Verarbeitungseinheit 6 mit einem zweiten Speicherbereich 5 auf, in dem ein Umgebungsmodell der realen Umgebung 1 abgelegt ist. In einem beispielhaften Szenario soll das reale Objekt 3 in die reale Umgebung 1 zu einem Zeitpunkt integriert werden, zu dem bereits in dem Umgebungsmodell die weiteren realen Komponenten 3a,3b,3c modelliert sind.

Das System umfasst Mittel zur Positionserfassung 2, die in diesem Beispiel einen in Form eines RFID Tags realisierten Positionsmarker umfassen. Der RFID Tag ist am realen Objekt 3 angeordnet und kann mit einer Erfassungseinheit lokalisiert werden. Die Erfassungseinheit sendet entsprechende Positionsinformationen an die Verarbeitungseinheit 6, so dass der Verarbeitungseinheit 6 die Position des realen Objektes 3 im Bezug auf die reale Umgebung 1 bekannt ist.

Ferner weist das reale Objekt 3 einen ersten Speicherbereich 4 auf, in dem ein dreidimensionales Modell des realen Objektes 3 abgelegt ist. Beispielsweise mit Hilfe einer Sendevorrichtung sendet das reale Objekt 3 eine entsprechende Datenmenge an die Verarbeitungseinheit 6.

Die Verarbeitungseinheit 6 verfügt nunmehr über alle Informationen, die notwendig sind, dass Objektmodell des realen Objektes 3 in das in dem zweiten Speicherbereich 5 gespeicherte Umgebungsmodell positionsgenau zu integrieren.

Wie in FIG 1 zu erkennen ist, wird ein Teil des realen Objektes 3 durch ein erstes weiteres Objekt 3b verdeckt, während ein Teil eines zweiten weiteren realen Objektes 3a durch einen Teil des realen Objektes 3 verdeckt wird. Da die Verarbeitungseinheit über die Positionsinformationen des realen Objektes 3 in Bezug auf die reale Umgebung 1 verfügt, ist sie in der Lage, derartige Verdeckungen zu erkennen und innerhalb des Umgebungsmodells kenntlich zu machen.

Die Ausführung der Mittel zur Positionserfassung 2 in Form eines am realen Objekt 3 befestigten RFID Tags stellt nur eine mögliche Ausführungsform der Positionserfassung dar. Alternativ ist auch denkbar, dass die Mittel zur Positionserfassung 2 in Form eines Positionssensors ausgeführt sind, der an dem realen Objekt 3 angeordnet ist und in der Lage ist, die Position des realen Objektes 3 in Bezug auf die reale Umgebung 1 bzw. in Bezug auf die weiteren realen Objekte 3a,3b,3c zu erfassen.

Beispielsweise sendet dieser Positionssensor ein Funksignal an eines oder mehrere der weiteren realen Objekte 3a,3b,3c. Aus der Laufzeit dieses Funksignals zu einem der weiteren realen Objekte 3a,3b,3c wird anschließend die Entfernung zwischen Sender und Empfänger bestimmt. Wird eine derartige Entfernungsmessung zu mindestens zwei der weiteren Objekte 3a,3b,3c in der realen Umgebung 1 durchgeführt, kann die Position des realen Objektes 3 in Bezug auf die reale Umgebung bestimmt werden.

Als weitere Alternative für die Ausführung der Mittel zur Positionserfassung können optische Vermessungsverfahren eingesetzt werden.

Mit Hilfe einer am realen Objekt 3 angeordneten Sendevorrichtung können die entsprechenden Positionsinformationen von dem realen Objekt 3 an die Verarbeitungseinheit 6 gesendet werden. Dieselbe Sendevorrichtung kann auch verwendet werden, um das im ersten Speicherbereich 4 abgelegte Objektmodell des realen Objektes 3 an die Verarbeitungseinheit 6 zu senden.

Auch die in FIG 1 dargestellte Anordnung des ersten Speicherbereiches 4 innerhalb des realen Objektes stellt nur eine mögliche Ausführungsform der Erfindung dar. Alternativ ist es ebenso möglich, den ersten Speicherbereich 4 innerhalb der Verarbeitungseinheit 6 oder auf einer dezentralen Speichervorrichtung anzuordnen.

Auch für die Verarbeitungseinheit 6 sind verschiedene Realisierungsformen denkbar. Beispielsweise handelt es sich bei der Verarbeitungseinheit 6 um einen Anlagenserver oder auch um eine Bedien- und Beobachtungsstation für eine Fertigungsumgebung.

FIG 2 zeigt eine Darstellung eines Umgebungsmodells einer automatisierten Prozessumgebung, wie sie beispielsweise einem Anwender an einem Computer zur Verfügung steht. Bei der automatisierten Prozessumgebung handelt es sich um eine Fertigungsstraße, die zur automatisierten Fertigung von Fahrzeugkarosserien vorgesehen ist.

Das Umgebungsmodell umfasst ein dreidimensionales Objektmodell eines Förderbandes 13, ein dreidimensionales Objektmodell einer Fahrzeugkarosserie 14 und dreidimensionale Modelle von Fertigungsrobotern 15. Insgesamt sind sechs Fertigungsroboter 15 an der Fertigung der Fahrzeugkarosserie 14 beteiligt. Denkbar wäre beispielsweise, dass bei der Planung einer derartigen Fertigungseinrichtung zunächst vier Fertigungsroboter 15 eingeplant waren, und in einem entsprechenden Umgebungsmodell integriert waren. Zur Beschleunigung des Prozessablaufes wurden nach einiger Zeit zwei weitere Fertigungsroboter 15 hinzugefügt. Zu den neu hinzugefügten Fertigungsrobotern 15 liegen nun entsprechende Objektmodelle vor, die sich in das Umgebungsmodell der Fertigungsumgebung integrieren lassen.

Die neu hinzugefügten Fertigungsroboter 15 verfügen über einen Positionssensor, mit dessen Hilfe die Position der neuen Roboter 15 in Bezug auf die Fertigungsumgebung erfasst werden kann. Mit Hilfe der entsprechenden Positionsinformationen und den Objektmodellen der neu hinzugefügten Fertigungsroboter 15 kann nun das Umgebungsmodell erweitert werden. Die Objektmodelle der neuen Fertigungsroboter können positionsgenau in das zuvor existierende Umgebungsmodell der Fertigungsstraße integriert werden.

Denkbar wäre auch und von der Erfindung umfasst, dass nicht nur die Automatisierungsobjekte wie die Fertigungsroboter 15 oder das Förderband 13 in Form von einzelnen Objektmodellen vorliegen, die in ein Umgebungsmodell integriert werden können. Auch zu der Fahrzeugkarosserie 14 kann ein entsprechendes Objektmodell existieren. So wäre auch ein Szenario denkbar, bei dem zunächst auf dem Förderband 13 PKW-Karosserien gefertigt wurden. Von einer derartigen Fertigungseinrichtung zur Fertigung von PKW-Karosserien lag bereits ein Umgebungsmodell vor. Nach einiger Zeit ist die Fertigungsstraße für eine Fertigung von Buskarosserien umgebaut worden. Da von der entsprechenden Buskarosserie ein Objektmodell vorlag, musste nicht das komplette Umgebungsmodell der Fertigungseinrichtung neu generiert werden. Stattdessen wurde ein zuvor die PKW-Karosserie modellierendes Objektmodell aus dem Umgebungsmodell entfernt und das Objektmodell der Buskarosserie in das Umgebungsmodell integriert. Durch die Mittel zur Positionserfassung konnte die Integration des Objektmodells der Buskarosserie positionsgenau in das Umgebungsmodell erfolgen.

Auf diese Art und Weise kann die Erfindung genutzt werden, um nicht nur statische Komponenten wie Maschinen oder Anlagen zu modellieren, sondern auch dynamische Komponenten wie z.B. ein fahrerloses Transportsystem, das nur zu bestimmten Zeiten in einer Anlagen vorhanden ist, oder auch ein Produkt, das gerade gefertigt wird.

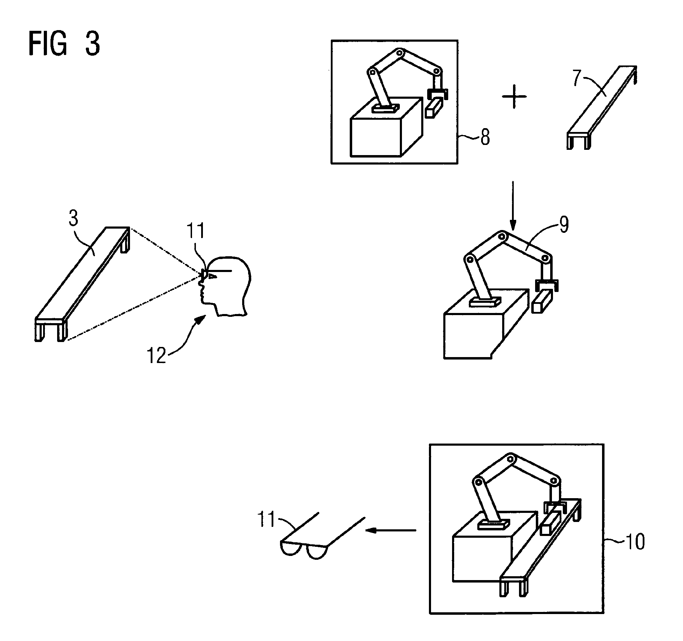

FIG 3 zeigt eine schematische Darstellung eines Augmented Reality Systems mit einem System zur Modellierung einer realen Umgebung. Dargestellt ist ein Anwendungsszenario des Augmented Reality Systems im Bereich der Automatisierungstechnik, wobei das Augmented Reality System zur Planung einer Erweiterung einer bestehenden Fertigungsanlage eingesetzt werden soll.

Das Augmented Reality System umfasst eine Wiedergabeeinheit 11, die beispielsweise in Form einer Datenbrille, auch Head-Mounted-Display genannt, von einem Anwender 12 getragen werden kann. Der Anwender 12 kann die reale Umgebung durch die Datenbrille 11 direkt wahrnehmen. Im Blickfeld des Anwenders 12 befindet sich ein reales Objekt 3. Bei dem realen Objekt 3 handelt es sich beispielsweise um ein Förderband.

Weiterhin umfasst das Augmented Reality System eine in der Figur nicht dargestellte Erfassungseinheit, mit der das Blickfeld und der Blickwinkel des Anwenders 12 erfasst werden können.

Die Planungsaufgabe des dargestellten Szenarios besteht darin, einen das Förderband 3 bedienenden Roboter in die Fertigungsumgebung zu integrieren. Um dem Anwender ein möglichst realitätsnahes Abbild der so entstehenden Fertigungsumgebung zu ermöglichen, wird ein dreidimensionales weiteres Objektmodell 8 mit Hilfe der Wiedergabeeinheit 11 in das Blickfeld des Anwenders 12 eingeblendet. Ziel hierbei ist eine möglichst positionsgenaue Einblendung des weiteren Objektmodells 8 in die vom Anwender 12 durch die Datenbrille 11 wahrgenommene reale Umgebung in dessen Blickfeld. Daher wird das Augmented Reality System genutzt, um Verdeckungsflächen des durch das weitere Objektmodell 8 dargestellten virtuellen Roboters durch das Förderband 3 im Blickfeld des Anwenders 12 zu ermitteln. Die Berechnung dieser Verdeckungsflächen wird von einer in der Figur nicht dargestellten Verarbeitungseinheit durchgeführt. Hierzu benötigt die Verarbeitungseinheit neben dem weiteren Objektmodell 8 des virtuellen Roboters ein dreidimensionales Umgebungsmodell, in dem ein Objektmodell 7 des Förderbandes 3 integriert ist.

Neben dem Objektmodell 7 des Förderbandes 3 muss der Verarbeitungseinheit ferner die Position des Förderbandes 3 in Bezug auf die reale Umgebung bekannt sein. Hierzu enthält das System Mittel zur Positionserfassung des Förderbandes, wie sie bereits im Zusammenhang mit der Beschreibung zur FIG 1 erläutert wurden. Die Mittel zur Positionserfassung ermöglichen eine positionsgenaue Integration des Objektmodells 7 innerhalb des Umgebungsmodells.

Anhand der von den Mitteln zur Positionserfassung bereitgestellten Positionsinformationen bezüglich des Förderbandes 3, des von der Erfassungseinheit ermittelten Blickwinkels und Blickfeldes des Anwenders 12 und anhand des Objektmodells 7 des Förderbandes 3 ist das System nun in der Lage, Verdeckungsflächen des virtuellen Roboters in Abhängigkeit der Position des virtuellen Roboters in Bezug auf die reale Umgebung zu bestimmen.

Die Position des virtuellen Roboters kann beispielsweise von dem Anwender 12 gesteuert werden. In dem dargestellten Szenario hat der Anwender 12 den virtuellen Roboter hinter dem Förderband 3 positioniert. Daher kommt es zu einer teilweisen Verdeckung des virtuellen Roboters durch das Förderband 3. Entsprechend berechnet die Verarbeitungseinheit eine Einblendung 9, in der die durch das Förderband 3 verdeckten Flächen des weiteren Objektmodells 8 des virtuellen Roboters ausgeblendet sind.

Die Einblendung 9 wird nun mit Hilfe der Wiedergabeeinheit 11 dem Anwender 12 dargestellt, so dass dieser in seinem subjektiven Wahrnehmungsbereich eine positionsgenaue Darstellung der erweiterten Realität 10 erhält.

Bei dem in FIG 3 gezeigten Augmented Reality System ist die Wiedergabeeinheit 11 in Form einer nach dem Optical-See-Through Prinzip ausgeführten Datenbrille realisiert. Bei dieser Datenbrille nimmt der Anwender 12 die reale Umgebung in seinem Sichtfeld direkt wahr. Aktiv eingeblendet wird nur der von der Realität nicht verdeckte Teil des virtuellen Roboters bzw. des zugehörigen Obejektmodells.

Alternativ hierzu wäre auch eine Wiedergabe nach dem Video-See-Through Prinzip denkbar und von der Erfindung umfasst. Hierbei wird z.B. die reale Umgebung im Blickfeld des Anwenders mit Hilfe einer Kamera erfasst und mit einer entsprechenden Wiedergabeeinheit zusammen mit der Einblendung 9 dargestellt. Die Einblendung 9 wird hierbei über das von der Kamera erfasste Bild gelegt, so dass die Teile des Bildes überdeckt werden, die hinter der Einblendung 9 liegen.

Alternativ zu einer Wiedergabe des realen Objektes 3 durch ein direkt von der Kamera erfasstes Bild ist auch denkbar, dass die nicht durch das virtuelle Objekt verdeckten Teile der realen Umgebung durch das Umgebungsmodell wiedergegeben werden.

## Patentansprüche

1. System zur Modellierung einer realen Umgebung (1) mit
- Mitteln zur Positionserfassung (2) eines realen Objektes (3) in Bezug auf die reale Umgebung (1), das innerhalb der realen Umgebung (1) verschoben wurde oder in die reale Umgebung (1) integriert wurde,
- mindestens einem ersten Speicherbereich (4) für ein Objektmodell (7) des realen Objektes (3),
- mindestens einem zweiten Speicherbereich (5) für ein Umgebungsmodell der realen Umgebung (1), in dem einzelne Objektmodelle, die den verschiedenen Objekten der realen Umgebung (1) zugeordnet sind, zu einem Gesamtmodell zusammengefügt sind, und
- mindestens einer Verarbeitungseinheit (6) mit Mitteln zur Aktualisierung der Position des Objektmodells (7) innerhalb des Umgebungsmodells, wenn das reale Objekt (3) innerhalb der realen Umgebung (1) verschoben wurde oder zur positionsgenauen Integration des Objektmodells (7) in das Umgebungsmodell, wenn das reale Objekt (3) in die reale Umgebung (1) integriert wurde.

2. System nach Anspruch 1,
wobei die Mittel zur Positionserfassung (2) einen zur Anordnung am realen Objekt (3) vorgesehenen Positionssensor umfassen, der zur Positionsbestimmung des realen Objektes (3) in Bezug auf die reale Umgebung (1) vorgesehen ist.

3. System nach Anspruch 1 oder 2,
wobei die Mittel zur Positionserfassung (2) mindestens einen zur Anordnung am realen Objekt (3) vorgesehenen Positionsmarker und eine Erfassungseinheit zur Erfassung der Position des Positionsmarkers aufweisen.

4. System nach einem der vorhergehenden Ansprüche,
wobei der erste Speicherbereich (4) in der Verarbeitungseinheit (6) angeordnet ist.

5. System nach einem der vorhergehenden Ansprüche,
wobei der erste Speicherbereich (4) zur Anordnung am realen Objekt (3) vorgesehen ist.

6. System nach einem der vorhergehenden Ansprüche mit einer zur Anordnung am realen Objekt (3) vorgesehenen Sendevorrichtung, die zum Senden von Positionsinformationen über die Position des realen Objektes (3) und/oder zum Senden des Objektmodells vorgesehen ist.

7. System nach einem der vorhergehenden Ansprüche,
wobei das System zur Modellierung einer automatisierten Prozessumgebung vorgesehen ist und das reale Objekt (3) insbesondere als Automatisierungsobjekt oder als Komponente eines Automatisierungsobjektes ausgeführt ist.

8. Augmented-Reality System für einen Anwender (12) mit einem System zur Modellierung einer realen Umgebung (1) nach einem der Ansprüche 1 bis 7.

9. Augmented-Reality System nach Anspruch 8,
wobei die Verarbeitungseinheit (6) zur positionsgenauen Integration eines weiteren Objektmodells (8), welches ein virtuelles Objekt modelliert, in das Umgebungsmodell vorgesehen ist.

10. Augmented-Reality System nach Anspruch 9,
wobei die Verarbeitungseinheit (6) zur Berechnung wechselseitiger Verdeckungen der realen Umgebung (1) und des virtuellen Objektes in Abhängigkeit einer Position des virtuellen Objektes in Bezug auf die reale Umgebung (1) vorgesehen ist.

11. Augmented-Reality System nach einem der Ansprüche 9 oder 10 mit einer Wiedergabevorrichtung (11) zur Darstellung des weiteren Objektmodells (8), wobei die Flächen des weiteren Objektmodells (8) ausgeblendet sind, die von der realen Umgebung (1) verdeckt werden.

12. Augmented-Reality System nach Anspruch 11,
wobei die Wiedergabevorrichtung (11) zur Darstellung eines Teils des Umgebungsmodells vorgesehen ist, der ein im Blickfeld des Anwenders (12) befindlichen Bereich der realen Umgebung (1) modelliert.

13. Augmented-Reality System nach Anspruch 11,
wobei die Wiedergabevorrichtung (11) als durchsichtige Datenbrille ausgeführt ist, durch die die reale Umgebung (1) vom Anwender (12) direkt wahrnehmbar ist.

14. Augmented-Reality System nach einem der Ansprüche 8 bis 13 mit Mitteln zur Erfassung des Blickfeldes und/oder Blickwinkels des Anwenders (12).

15. Verfahren zur Modellierung einer realen Umgebung (1) mit folgenden Verfahrensschritten:
- Positionserfassung eines realen Objektes (3) in Bezug auf die reale Umgebung (1), wobei das reale Objekt (3) innerhalb der realen Umgebung (1) verschoben wurde oder in die reale Umgebung (1) integriert wurde,
- positionsgenaue Integration eines Objektmodells (7) des realen Objektes (3) in ein Umgebungsmodell der realen Umgebung (1) mit einer Verarbeitungseinheit (6), wenn das reale Objekt (3) in die reale Umgebung (1) integriert wurde oder
- Aktualisierung der Position des Objektmodells (7) innerhalb des Umgebungsmodells, wenn das reale Objekt (3) innerhalb der realen Umgebung (1) verschoben wurde,
wobei in dem Umgebungsmodell einzelne Objektmodelle, die den verschiedenen Objekten der realen Umgebung (1) zugeordnet sind, zu einem Gesamtmodell zusammengefügt sind.

16. Verfahren nach Anspruch 15,
wobei die Position des realen Objektes (3) mit einem am realen Objekt angeordneten Positionssensor in Bezug auf die reale Umgebung erfasst wird.

17. Verfahren nach einem der Ansprüche 15 oder 16,
wobei mindestens ein Positionsmarker am realen Objekt (3) angeordnet wird und die Position des Positionsmarkers mit einer Erfassungseinheit erfasst wird.

18. Verfahren nach einem der Ansprüche 15 bis 17,
wobei das Objektmodell (7) in der Verarbeitungseinheit (6) gespeichert wird.

19. Verfahren nach einem der Ansprüche 15 bis 17,
wobei das Objektmodell (7) in einem am realen Objekt (3) angeordneten Speicher gespeichert wird.

20. Verfahren nach einem der Ansprüche 15 bis 19,
wobei mit einer am realen Objekt (3) vorgesehenen Sendevorrichtung Positionsinformationen über die Position des realen Objektes (3) und/oder das Objektmodell (7) an die Verarbeitungseinheit (6) gesendet werden.

21. Verfahren nach einem der Ansprüche 15 bis 20,
wobei das Verfahren zur Modellierung einer automatisierten Prozessumgebung vorgesehen ist und das reale Objekt (3) insbesondere als Automatisierungsobjekt oder als Komponente eines Automatisierungsobjektes ausgeführt ist.

22. Verfahren nach einem der Ansprüche 15 bis 21,
wobei ein weiteres Objektmodell (8), welches ein virtuelles Objekt modelliert, positionsgenau in das Umgebungsmodell integriert wird.

23. Verfahren nach Anspruch 22,
wobei wechselseitige Verdeckungen der realen Umgebung (1) und des virtuellen Objektes in Abhängigkeit einer Position des virtuellen Objektes in Bezug auf die reale Umgebung (1) berechnet werden.

24. Verfahren nach einem der Ansprüche 22 oder 23,
wobei das weitere Objektmodell (8) mit einer Wiedergabevorrichtung (11) dargestellt wird, wobei die Flächen des weiteren Objektmodells (8) ausgeblendet werden, die von der realen Umgebung (1) verdeckt werden.

25. Verfahren nach Anspruch 24,
wobei mit der Wiedergabevorrichtung (11) ein Teil des Umgebungsmodells dargestellt wird, der ein im Blickfeld des Anwenders (12) befindlichen Bereich der realen Umgebung (1) modelliert.

26. Verfahren nach Anspruch 24,
wobei die reale Umgebung (1) vom Anwender (12) direkt durch eine durchsichtige Datenbrille wahrgenommen wird.

27. Verfahren nach einem der Ansprüche 22 oder 26,
wobei das Blickfeld und/oder der Blickwinkel des Anwenders (12) erfasst werden.

## Claims

1. System for modelling a real environment (1),
comprising
- means for detecting the position (2) of a real object (3) in relation to the real environment (1), said real object (3) having been displaced within the real environment (1) or integrated into the real environment (1),
- at least one first memory area (4) for an object model (7) of the real object (3),
- at least one second memory area (5) for an environmental model of the real environment (1), in which environmental model individual object models that are assigned to the different objects of the real environment (1) are combined to form an overall model, and
- at least one processing unit (6) having means for updating the position of the object model (7) within the environmental model if the real object (3) has been displaced within the real environment (1) or for integrating the object model (7) in a positionally accurate manner into the environmental model if the real object (3) has been integrated into the real environment.

2. System according to claim 1,
wherein the position-detecting means (2) include a position sensor provided for attaching to the real object (3) and for determining the position of the real object (3) in relation to the real environment (1).

3. System according to claim 1 or 2,
wherein the position-detecting means (2) have at least one position marker provided for attaching to the real object (3) and a detection unit for detecting the position of the position marker.

4. System according to one of the preceding claims,
wherein the first memory area (4) is disposed in the processing unit (6).

5. System according to one of the preceding claims,
wherein the first memory area (4) is provided for being disposed on the real object (3).

6. System according to one of the preceding claims, having a transmitting device provided for mounting on the real object (3) and for transmitting position information about the position of the real object (3) and/or for transmitting the object model.

7. System according to one of the preceding claims,
wherein the system is provided for modelling an automated process environment and the real object (3) is embodied in particular as an automation object or as a component of an automation object.

8. Augmented reality system for a user (12), comprising a system for modelling a real environment (1) according to one of claims 1 to 7.

9. Augmented reality system according to claim 8,
wherein the processing unit (6) is provided for integrating a further object model (8) which models a virtual object into the environmental model in a positionally accurate manner.

10. Augmented reality system according to claim 9,
wherein the processing unit (6) is provided for computing mutual occlusions of the real environment (1) and of the virtual object as a function of a position of the virtual object in relation to the real environment (1).

11. Augmented reality system according to one of claims 9 or 10, comprising a playback device (11) for visualising the further object model (8), with the surfaces of the further object model (8) that are hidden by the real environment (1) being masked out.

12. Augmented reality system according to claim 11,
wherein the playback device (11) is provided for visualising a part of the environmental model which models an area of the real environment (1) that is located in the field of view of the user (12).

13. Augmented reality system according to claim 11,
wherein the playback device (11) is embodied as see-through data glasses by means of which the real environment (1) can be directly perceived by the user (12).

14. Augmented reality system according to one of claims 8 to 13, comprising means for detecting the field of view and/or angle of view of the user (12).

15. Method for modelling a real environment (1),
comprising the following steps:
- detection of the position of a real object (3) in relation to the real environment (1), with the real object (3) having been displaced within the real environment (1) or integrated into the real environment (1),
- positionally accurate integration of an object model (7) of the real object (3) into an environmental model of the real environment (1) by means of a processing unit (6) if the real object (3) has been integrated into the real environment (1),
- updating of the position of the object model (7) within the environmental model if the real object (3) has been displaced within the real environment (1),
wherein individual object models in the environmental model that have been assigned to the different objects of the real environment (1) are combined to form an overall model.

16. Method according to claim 15,
wherein the position of the real object (3) in relation to the real environment is detected by means of a position sensor mounted on the real object.

17. Method according to one of claims 15 or 16,
wherein at least one position marker is mounted on the real object (3) and the position of the position marker is detected by means of a detection unit.

18. Method according to one of claims 15 to 17,
wherein the object model (7) is stored in the processing unit (6) .

19. Method according to one of claims 15 to 17,
wherein the object model (7) is stored in a memory disposed on the real object (3).

20. Method according to one of claims 15 to 19,
wherein position information about the position of the real object (3) and/or the object model (7) is transmitted to the processing unit (6) by means of a transmitting device provided on the real object (3).

21. Method according to one of claims 15 to 20,
wherein the method is provided for modelling an automated process environment and the real object (3) is embodied in particular as an automation object or as a component of an automation object.

22. Method according to one of claims 15 to 21,
wherein a further object model (8) which models a virtual object is integrated into the environmental model in a positionally accurate manner.

23. Method according to claim 22,
wherein mutual occlusions of the real environment (1) and of the virtual object are computed as a function of a position of the virtual object in relation to the real environment (1).

24. Method according to one of claims 22 or 23,
wherein the further object model (8) is visualised by means of a playback device (11), with the surfaces of the further object model (8) that are hidden by the real environment (1) being masked out.

25. Method according to claim 24,
wherein a part of the environmental model which models an area of the real environment (1) located in the field of view of the user (12) is visualised by means of the playback device (11) .

26. Method according to claim 24,
wherein the real environment (1) is perceived directly by the user (12) by means of see-through data glasses.

27. Method according to one of claims 22 or 26,
wherein the field of view and/or the angle of view of the user (12) are detected.

## Revendications

1. Système de modélisation d'un environnement réel (1) comportant
- des moyens de détection de position (2) d'un objet réel (3) par rapport à l'environnement réel (1), qui a été déplacé à l'intérieur de l'environnement réel (1) ou a été intégré dans l'environnement réel (1),
- au moins une première zone de mémoire (4) pour un modèle d' objet (7) de l' objet réel (3),
- au moins une deuxième zone de mémoire (5) pour un modèle d'environnement de l'environnement réel (1), dans lequel des modèles d'objet individuels, attribués aux différents objets de l'environnement réel (1), sont rassemblés en un modèle global, et
- au moins une unité de traitement (6) comportant des moyens pour actualiser la position du modèle d'objet (7) à l'intérieur du modèle d'environnement, lorsque l'objet réel (3) a été déplacé à l'intérieur de l'environnement réel (1), ou pour intégrer le modèle d'objet (7) à la position exacte dans le modèle d'environnement, lorsque l'objet réel (3) a été intégré dans l'environnement réel (1).

2. Système selon la revendication 1,
dans lequel les moyens de détection de position (2) comprennent un capteur de position prévu pour être disposé sur l'objet réel (3) et qui est destiné à déterminer la position de l'objet réel (3) par rapport à l'environnement réel (1).

3. Système selon la revendication 1 ou 2,
dans lequel les moyens de détection de position (2) comprennent au moins un marqueur de position prévu pour être disposé sur l'objet réel (3) et une unité de détection pour détecter la position du marqueur de position.

4. Système selon l'une des revendications précédentes,
dans lequel la première zone de mémoire (4) est disposée dans l'unité de traitement (6).

5. Système selon l'une des revendications précédentes,
dans lequel la première zone de mémoire (4) est prévue pour être disposée sur l'objet réel (3).

6. Système selon l'une des revendications précédentes comportant un dispositif d'émission prévu pour être disposé sur l'objet réel (3) et qui est destiné à émettre des informations de position sur la position de l'objet réel (3) et/ou à émettre le modèle d'objet.

7. Système selon l'une des revendications précédentes,
le système étant prévu pour modéliser un environnement de processus automatisé, et l'objet réel (3) étant exécuté en particulier sous forme d'objet d'automatisation ou sous forme de composant d'un objet d'automatisation.

8. Système de réalité augmentée pour un utilisateur (12) comportant un système de modélisation d'un environnement réel (1) selon l'une des revendications 1 à 7.

9. Système de réalité augmentée selon la revendication 8, dans lequel l'unité de traitement (6) est prévue pour intégrer un autre modèle d' objet (8), qui modélise un objet virtuel, à la position exacte dans le modèle d'environnement.

10. Système de réalité augmentée selon la revendication 9, dans lequel l'unité de traitement (6) est prévue pour calculer des occultations mutuelles de l'environnement réel (1) et de l'objet virtuel en fonction d'une position de l'objet virtuel par rapport à l'environnement réel (1).

11. Système de réalité augmentée selon l'une des revendications 9 ou 10 comportant un dispositif de reproduction (11) pour représenter l'autre modèle d'objet (8), les surfaces de l'autre modèle d'objet (8), occultées par l'environnement réel (1), étant masquées.

12. Système de réalité augmentée selon la revendication 11, dans lequel le dispositif de reproduction (11) est prévu pour représenter une partie du modèle d'environnement, qui modélise une zone de l'environnement réel (1) se trouvant dans le champ de vision de l'utilisateur (12).

13. Système de réalité augmentée selon la revendication 11, dans lequel le dispositif de reproduction (11) est exécuté sous forme de lunettes de données transparentes grâce auxquelles l'environnement réel (1) est directement perceptible par l'utilisateur (12).

14. Système de réalité augmentée selon l'une des revendications 8 à 13 comportant des moyens de détection du champ de vision et/ou de l'angle de vision de l'utilisateur (12) .

15. Procédé de modélisation d'un environnement réel (1) comportant les étapes de procédé suivantes :
- détection de position d'un objet réel (3) par rapport à l'environnement réel (1), l'objet réel (3) ayant été déplacé à l'intérieur de l'environnement réel (1) ou ayant été intégré dans l'environnement réel (1),
- intégration d' un modèle d' objet (7) de l'objet réel (3) à la position exacte dans un modèle d'environnement de l'environnement réel (1) à l'aide d'une unité de traitement (6), lorsque l'objet réel (3) a été intégré dans l'environnement réel (1), ou
- actualisation de la position du modèle d'objet (7) à l'intérieur du modèle d'environnement, lorsque l'objet réel (3) a été déplacée à l'intérieur de l'environnement réel (1),
dans le modèle d'environnement des modèles d'objet individuels, attribués aux différents objets de l'environnement réel (1), étant rassemblés en un modèle global.

16. Procédé selon la revendication 15,
dans lequel on détecte la position de l'objet réel (3) par rapport à l'environnement réel à l'aide d'un capteur de position disposé sur l'objet réel.

17. Procédé selon l'une des revendications 15 ou 16,
dans lequel on dispose au moins un marqueur de position sur l'objet réel (3) et on détecte la position du marqueur de position à l'aide d'une unité de détection.

18. Procédé selon l'une des revendications 15 à 17,
dans lequel on stocke le modèle d'objet (7) dans l'unité de traitement (6).

19. Procédé selon l'une des revendications 15 à 17,
dans lequel on stocke le modèle d'objet (7) dans une mémoire disposée sur l'objet réel (3).

20. Procédé selon l'une des revendications 15 à 19,
dans lequel on envoie à l'aide d'un dispositif d'émission prévu sur l'objet réel (3) des informations de position sur la position de l'objet réel (3) et/ou le modèle d'objet (7) à l'unité de traitement (6).

21. Procédé selon l'une des revendications 15 à 20,
le procédé étant prévu pour modéliser un environnement de processus automatisé, et l'objet réel (3) étant exécuté en particulier sous forme d'objet d'automatisation ou sous forme de composant d'un objet d'automatisation.

22. Procédé selon l'une des revendications 15 à 21,
dans lequel on intègre un autre modèle d'objet (8), qui modélise un objet virtuel, à la position exacte dans le modèle d'environnement.

23. Procédé selon la revendication 22,
dans lequel on calcule des occultations mutuelles de l'environnement réel (1) et de l'objet virtuel en fonction d'une position de l'objet virtuel par rapport à l'environnement réel (1).

24. Procédé selon l'une des revendications 22 ou 23,
dans lequel on représente l'autre modèle d'objet (8) à l'aide d'un dispositif de reproduction (11), en masquant les surfaces de l'autre modèle d'objet (8), occultées par l'environnement réel (1).

25. Procédé selon la revendication 24,
dans lequel on représente à l'aide du dispositif de reproduction (11) une partie du modèle d'environnement, qui modélise une zone de l'environnement réel (1) se trouvant dans le champ de vision de l'utilisateur (12).

26. Procédé selon la revendication 24,
dans lequel l'environnement réel (1) est directement perçu par l'utilisateur (12) grâce à des lunettes de données transparentes.

27. Procédé selon l'une des revendications 22 ou 26,
dans lequel le champ de vision et/ou l'angle de vision de l'utilisateur (12) sont détectés.
